# EUROPEAN PATENT SPECIFICATION

(11) **EP 4 263 173 B1**
(45) Date of publication and mention of the grant of the patent: **29.01.2025**
(21) Application number: 21838979.9
(22) Date of filing: 20.12.2021
(51) Int. Cl.: B29C 63/02

(54) **A DEVICE FOR APPLYING AN ADHESIVE TO A LONGITUDINAL PRODUCT**
VORRICHTUNG ZUM AUFTRAGEN EINES KLEBSTOFFES AUF EIN LÄNGLICHES PRODUKT
DISPOSITIF POUR APPLIQUER UN ADHÉSIF SUR UN PRODUIT LONGITUDINAL

(30) Priority: 21.12.2020 DK PA202001440
(43) Date of publication of application: 25.10.2023
(73) Proprietor: REDMOND, Jack, 2770 Kastrup (DK)
(72) Inventor: REDMOND, Jack, 2770 Kastrup (DK)
(74) Representative: Kristensen, Martin Hjelm
(86) International application number: PCT/DK2021/050376
(87) International publication number: WO 2022/135642

(56) References cited:
- WO-A1-2011/105104
- WO-A2-2015/116446
- CN-A- 110 556 743
- GB-A- 2 483 950
- US-A1- 2012 318 445

## Description

### Field of the invention

The present invention relates in general to the field of electric installations.

More specifically, the present invention relates in a first aspect to a device for applying an adhesive to a longitudinal product.

In a second aspect, the present invention relates to a system comprising a device according to the first aspect in combination with a set of two or more guide members.

In a third aspect the present invention relates to a kit-of parts comprising a device according to the first aspect of the present invention in combination with a reel of adhesive tape.

In a fourth aspect the present invention provides a use of the device of the first aspect of the invention, or of a system according to the second aspect of the invention, or of a kit-of-parts according to the third aspect of the invention for applying an adhesive to a longitudinal product.

In a fifth aspect the present invention provides a method for applying an adhesive comprising a protective liner to a longitudinal product.

In a sixth aspect the present invention relates to a longitudinal product comprising an adhesive tape along at least part of its longitudinal extension, wherein said adhesive tape comprises an adhesive which is being protected by a protective liner; wherein said longitudinal product is being a tube or hose, such as a flexible tube or hose, such as a flexible tube for supplying medical quality air or oxygen to a patient.

In a seventh aspect the present invention relates to a longitudinal product comprising an adhesive tape which is being protected by a protective liner; wherein said longitudinal product furthermore comprises a protective tape covering at least part of said protective liner of said adhesive tape.

### Background of the invention

Electric cables are used in a variety of situations for conducting an electric current between two or more connection points. Accordingly, for some uses, electric cables are hidden in installations in shielded off enclosures. In other uses electric cables are used in a way where they are freely exposed to the surroundings.

In many situations it is desired to fix electric cables to the structure at which they are present in order to keep some kind of ordering of the cables. For instance, it is customary in electric installation to fix the electric cables by using strips or clips for bundling two or more cables which at least partly follow a common path in the installation.

In private homes and in offices electric power cords are used for powering various types of electric equipment.

In order to avoid that power cords in a messy way are merely lying around on a floor, it is common practice to fix such power cords by using a number of small clips comprising a nail which may be rammed into a floor panel so as to fix the cord to that panel. In this way some ordering of the cord is attained.

Cables comprising an adhesive are known. The company Taperwire^{®} provides loudspeaker cables having adhered thereto a strip of adhesive tape along the whole longitudinal extension of the cable. The adhesive tape is covered with a protective liner for protecting the adhesive thereof. Upon use, the user simply removes the protective liner in order to expose the adhesive surface of the adhesive. Subsequently, the adhesive speaker cable can be adhered to a surface, such as a wall or a floor panel.

As the type and dimensions of a cable highly depend on the purpose of its use (such as number of conductors, requirement to magnitude of current to be conducted, necessity of shielding mesh against electromagnetic interference etc.), a speaker cable as the ones supplied by Taperwire^{®} may not suit every purpose of conducting electric current.

Accordingly, a need exists for a device which enables applying an adhesive to an existing cable having predetermined dimensions and geometry.

Adhering an adhesive to longitudinal products other than cables could in general be desirable as well. Such products could be rubber seals, flexible tubes or hoses, extruded aluminium profiles, trims for windows or floor panels or the like.

Within the medical field, it would be especially desirable to be able to adhere flexible air tubes, such as tubes for supplying medical quality air or oxygen to a patient, to a surface.

Hereby, a patient in need of oxygen from an oxygen container can have an oxygen container stored at a specific location in a room and convey the oxygen gas through tubes that are adhered to fixed structures, such as a wall or part of a bed or the like to the patient.

Accordingly, in this way the tubing can be neatly arranged from its source of the oxygen container to the patient.

Accordingly, there exist a general need for a device that allows application of an adhesive to a longitudinal product
It is an objective of the present invention to provide technology fulfilling this need.

A prior art technology is presented in WO 2015/116446A2.

### Brief description of the invention

This object is fulfilled by the present in its various aspects.

Accordingly, the present invention relates in a first aspect to a device for applying an adhesive to a longitudinal product, said device comprises:
a body comprising a guide member; wherein said guide member comprises a channel for receiving and guiding a longitudinal product in relation to said guide member, said channel is having a first end and a second end;
wherein said guide member comprises a tape slot for guiding an adhesive tape into said channel;
wherein said channel comprises a guide surface; and wherein said tape slot extends through at least part of the material of said guide member and into said guide surface of said channel, thereby allowing feeding an adhesive tape through the material of said guide member and into said channel of said guide member.

In a second aspect the present invention relates to a system comprising a device according to the first aspect of the invention in combination with a set of two or more guide members, wherein in respect of two or more of said two or more guide members, the geometries and/or dimensions of said channel are different.

In a third aspect the present invention relates to a kit-of parts comprising a device according to the first aspect of the present invention in combination with one or more reels of adhesive tape; and wherein the geometry and the dimensions of said adhesive tape is adapted to the geometry and the dimensions of the tape slot of a guide member of said device; optionally further in combination with one or more reels of protective tape.

In a fourth aspect the present invention provides a use of a device according to the first aspect of the present invention; or of a system according to the second aspect of the present invention, or of a kit-of-parts according to the third aspect of the present invention for applying an adhesive to a longitudinal product.

In a fifth aspect the present invention provides method for applying an adhesive to a longitudinal product, wherein said method comprises the following steps:
i) providing a device according to the first aspect of the invention;
ii) via said tape slot inserting an end of the adhesive tape into the channel of the guide member of said device in such a way that the exposed adhesive of said adhesive tape, upon entering said channel, faces said first end of said channel;
iii) arranging said longitudinal product in said channel of said guide member;
iv) displacing said longitudinal product along said channel of said guide member, in a direction from said first end of said channel to said second end of said channel, thereby making said exposed adhesive of said adhesive tape adhere to said longitudinal product along a desired extension thereof;
v) cutting the adhesive tape once the desired extension of application has been reached.

In a sixth aspect the present invention relates to a longitudinal product comprising an adhesive tape along at least part of its longitudinal extension, wherein said adhesive tape comprises an adhesive which is being protected by a protective liner; wherein said longitudinal product is being a tube or hose, such as a flexible tube or hose, such as a flexible tube for supplying medical quality air or oxygen to a patient.

In a seventh aspect the present invention relates to a longitudinal product comprising an adhesive tape along at least part of its longitudinal extension, wherein said adhesive tape comprises an adhesive which is being protected by a protective liner; wherein said longitudinal product furthermore comprises a protective tape covering at least part of said protective liner of said adhesive tape.

The present invention in its various aspects allows in an easy and efficient manner to apply an adhesive to a longitudinal product with the view to subsequently fasten, by adherence via said adhesive, to a surface.

### Brief description of the figures

Fig. 1 is a plan view illustrating the concepts of adhesive, adhesive tape and reel of adhesive tape according to the preset invention.
Fig. 2 is a plan view illustrating one embodiment of the device according to the invention.
Fig. 3 is a plan view illustrating the embodiment of Fig. 2 in a disassembled state.
Fig. 4a is a plan view illustrating the first guide member part and the second guide member part of the embodiment of the invention shown in Fig. 2 and 3.
Fig. 4b is a cross-sectional view illustrating the first guide member part and the second guide member part of an alternative embodiment of the first aspect of the invention.
Fig. 5 is a cross-sectional view illustrating another embodiment of the device of the invention.
Fig. 6 is a perspective view illustrating yet another embodiment of the device of the invention.
Fig. 7 is a perspective view illustrating the embodiment of Fig. 6 as seen from another perspective and without the guide member.
Fig. 8 is a perspective view illustrating the embodiment of Fig. 7 with the guide member attached.
Fig. 9 is a photograph illustrating the process of applying an adhesive to a longitudinal product by using the device of the present invention.
Fig. 10 is a photograph illustrating yet another embodiment of the device of the present invention.
Fig. 11 is a cross-sectional view of an embodiment of the guide member of the device according to the present invention.
Fig. 12 is a cross-sectional view illustrating the principle of a special embodiment of the guide member of the device according to the invention.
Fig. 13 is a photograph illustrating the device of the first aspect of the present invention in a disassembled state.
Fig. 14 is a perspective view illustrating an embodiment of the device according to the first aspect of the present invention comprising an auxiliary tape slot for a protective tape in addition to a tape slot for the adhesive tape to be applied to a longitudinal product as well as tape reel holders for these two types of tape.

### Detailed description of the invention

### The first aspect of the present invention

The present invention relates in a first aspect to a device for applying an adhesive to a longitudinal product, said device comprises:
a body comprising a guide member; wherein said guide member comprises a channel for receiving and guiding a longitudinal product in relation to said guide member, said channel is having a first end and a second end;
wherein said guide member comprises a tape slot for guiding an adhesive tape into said channel;
wherein said channel comprises a guide surface; and wherein said tape slot extends through at least part of the material of said guide member and into said guide surface of said channel, thereby allowing feeding an adhesive tape through the material of said guide member and into said channel of said guide member.

Accordingly, with the device according to the first aspect of the present invention it is possible to guide a longitudinal product, such as a flexible longitudinal product, such as an electric cable or a data cable, or a rigid product, through or along the guide member of the device. The guide member itself is designed in such a way that it allows an adhesive tape provided with a protective liner to be guided to the longitudinal product and adhered thereto as the longitudinal product is being displaced through or along the guide member. Hereby the longitudinal product will be applied with a length of adhesive having a protective liner adhered thereto. Once, the longitudinal product is ready for being adhered to a surface, the protective liner of the protective tape now applied to the longitudinal product, is removed, thereby exposing the adhesive of the adhesive tape. The longitudinal product may in this state be adhered to a surface.

It should be noted that the device during use is configured for applying an adhesive tape having a protective liner onto the longitudinal product. But as the adhesive tape comprises an adhesive (which is protected by a protective liner) it should within the scope of the present description and the appended claims be understood that the application of the adhesive tape onto a longitudinal product also implies application of an adhesive onto that longitudinal product.

In an embodiment of the first aspect of the present invention the channel of said guide member is having an essentially linear extension. Thereby even a rigid and linearly extending longitudinal product may be applied with an adhesive with the device.

Alternatively, the channel of said guide member may have a non-linear extension.

In an embodiment of the first aspect of the present invention the channel of said guide member is a through-going channel extending through the material of said guide member; or is a channel in a form of a recess arranged at a surface of said guide member.

Providing the channel of the guide member as a through-going channel improves guidance of the longitudinal product which is to be applied with an adhesive. On the other hand, providing the channel of the guide member as a recess arranged at a surface of said guide member makes it easier to arrange the longitudinal product in relation to the channel

In an embodiment of the first aspect of the present invention the tape slot extends through the material of said guide member to said channel in a direction essentially perpendicular to the linear extension of said channel, such as in a direction deviating no more than ± 30° from a perpendicular direction to the linear extension of said channel.

Hereby it is ensured that the adhesive tape can be guided into the space of the longitudinal product without too much friction between the adhesive tape and the guide member.

In an embodiment of the first aspect of the present invention the guide member is integrated with said body of said device.

This embodiment ensures a cost-efficient production of the device.

In a special embodiment, the guide member and the body of the device may even be the same entity.

In an embodiment of the first aspect of the present invention the guide member is configured to be detachable mounted to said body of said device.

This embodiment allows for interchangement of guide members so that the device is suitable for application of an adhesive tape to different longitudinal products having a wide range of different cross-sections. By making sure that the guide member used with the device can "accommodate" the longitudinal product which is to be applied with adhesive tape, almost any type of longitudinal product can be applied with an adhesive.

In an embodiment of the first aspect of the present invention the body of said device comprises a body attachment means, and said guide member also comprises guide member attachment means; wherein said body attachment means and said guide member attachment means are adapted to be able to detachably enter into engagement with each other, thereby enabling exchange of said guide member on said body.

Hereby the interchangeable guide members can be fastened to and removed from the body of the device with the view to fit a specific guide member which fits the cross-section of the longitudinal product to be applied with adhesive tape.

In an embodiment of the first aspect of the present invention the guide member comprises a first guide member part and a second guide member part.

In an embodiment of this embodiment the guide member is being divided into said first guide member part and said second guide member part at an interphase, said interphase is being arranged along said channel, thereby intersecting said channel along a longitudinal direction thereof.

These two embodiments allow for easy arrangement of the longitudinal product in the channel of the guide member. In case the longitudinal product is having an end which is too large to fit in the channel, this embodiment ensures that parts other than the end of that product can be applied with an adhesive.

In an embodiment of the first aspect of the present invention the first guide member part comprises a first guide member engagement means, and wherein said second guide member part comprises a second guide member engagement means; wherein said first guide member engagement means and said second guide member engagement means are configured to detachably enter into engagement with each other.

Hereby any lateral movement in relation to each other in ensured in respect of the first guide member part and the second guide member part.

In an embodiment of the first aspect of the present invention the body comprises a first body member and a second body member; wherein said first body member and said second body member are being attached to each other in a pivoting fashion around a pivoting point, thereby forming two jaws which, by rotation relative to each other, are configured to enable changing the configuration of said device between an open configuration and a closed configuration.

This embodiment allows easy arrangement of the longitudinal product into the channel of the guide member in case the guide member comprises two parts, wherein one guide member part is attached to the first body member and wherein a second guide member part is being attached to the second body member.

In an embodiment of the first aspect of the present invention the first body member comprises first body attachment means; and wherein said second body member comprises second body attachment means; wherein said first guide member part comprises a first guide member attachment means, wherein said second guide member part comprises a second guide member attachment means; wherein said first body attachment means is being configured to detachably enter into engagement with said first guide member attachment means; and wherein said second body attachment means is being configured to detachably enter into engagement with said second guide member attachment means, wherein said channel thereby is being formed upon bringing said device into its closed configuration.

This embodiment ensures that each of the two guide member parts may be attached to its respective body member.

In an embodiment of the first aspect of the present invention the said first body member comprises first body attachment means, wherein said first guide member part comprises a first guide member attachment means; wherein said first body attachment means is being configured to detachably enter into engagement with said first guide member attachment means; and wherein said second guide member part is integrated into said second body member.

This embodiment is intended for only having an exchangeable guide member part in the first body member, whereas the second guide member part may merely constitute a support surface for the first guide member part.

In an embodiment of the first aspect of the present invention the tape slot is a closed tape slot allowing access into said channel only from an end opening of said tape slot arranged opposite to the entry of said tape slot into said channel in said guide member; or wherein said tape slot is an open tape slot, further allowing access into said channel along the extension of said tape slot.

The latter embodiment allows sideways arrangement of the adhesive tape into the tape slot which may be advantageous.

In an embodiment of the first aspect of the present invention the channel is having a cross-sectional geometry selected from the group of geometries of: a circle, an oval, a triangle, a rectangle, such as a square, or a hexagon.

Such geometries fit corresponding geometries of a longitudinal product to be applied with an adhesive.

In an embodiment of the first aspect of the present invention the cross-section of said channel is having an extension in the direction defining the largest extension of: 3 - 300 mm, such as 5 - 250 mm, for example 10 - 200 mm, such as 15 - 150 mm, e.g. 20 - 120 mm, for example 25 - 100 mm, such as 30 - 80 mm, for example 40 - 70 mm or 50 - 60 mm; and/or wherein said channel 10 is having an extension in the direction defining the smallest extension of: 3 - 300 mm, such as 5 - 250 mm, for example 10 - 200 mm, such as 15 - 150 mm, e.g. 20 - 120 mm, for example 25 - 100 mm, such as 30 - 80 mm, for example 40 - 70 mm or 50 - 60 mm.

Such dimensions fit corresponding dimensions of the cross-section of a longitudinal product to be applied with an adhesive.

In an embodiment of the first aspect of the present invention the cross-section of said channel of said guide member comprises an essential circular curve comprising a notch, wherein said notch extends away from the center of said circular curve and into the material of said guide member.

In an embodiment of this embodiment said notch extends all the way along the longitudinal direction of said channel.

In an embodiment of this embodiment said notch is arranged at that longitudinal part of the surface of said channel corresponding to the location of the entry of said tape slot.

These three embodiments prevent any rotational movement of the longitudinal product having a circular cross-section upon being displaced along the guide member, thereby ensuring a linear application of the adhesive onto that product.

In an embodiment of the first aspect of the present invention the first body member and/or said second body member comprises a longitudinal recess, thereby forming said guide member as an integral part of said body; wherein said recess(s) thereby define(s) said channel, when said first body member and said second body member are being brought into their closed configuration.

In an embodiment of this embodiment the first body member and the second body member comprises engagement means configured to enter into engagement with each other upon bringing said first body member and said second body member into their closed configuration, thereby preventing any lateral movement of the first body member and said second body member relative to each other when being in their closed configuration.

These two embodiments represent a cost-efficient design of the device having no interchangeable guide members.

In an embodiment of the first aspect of the present invention the device furthermore comprises a tape reel holder for holding a reel of adhesive tape.

Hereby is avoided that the adhesive tape to be applied to the longitudinal product ends up being entangled upon application thereof.

In an embodiment of this embodiment said tape reel holder is having an orientation, relative to said tape slot of said guide member in a way enabling that once being loaded with a reel of adhesive tape, said reel of adhesive tape defines a plane which essentially intersects said tape slot.

Hereby the adhesive tape can be guided to the tape slot in the guide member without excessive friction.

In another embodiment of this embodiment said tape reel holder comprises a post having a proximal portion and a distal portion, wherein said proximal portion is being attached to said body of said device and wherein said distal portion comprises reel holding means, wherein said reel holding means is configured to allow a tape reel, once being mounted on said tape reel holder, to rotate relative to said post so as to be loosely arranged on the reel holding means.

This embodiment ensures a suitable way of mounting the reel of adhesive tape to the device during application of an adhesive tape to a longitudinal product.

In an embodiment of the first aspect of the present invention the device further comprising a roller, wherein said roller comprises first roller attachment means, and wherein said body comprises second roller attachment means, wherein said first roller attachment means are configured to detachably enter into engagement with said second roller attachment means.

The roller allows for applying pressure to the longitudinal product which has been applied with an adhesive upon mounting by adherence of that longitudinal product onto a surface.

In an embodiment of the first aspect of the present invention the guide member comprises an auxiliary tape slot for guiding a protective tape into said channel, said auxiliary tape slot extends through the material of the guide member into said channel at a position next to the said tape slot.

A protective tape prevents deterioration of the adhesive power of the adhesive of the adhesive tape during prolonged storage, such as being caused by physical impact to the longitudinal product which otherwise may imply that the protective liner of the protective tape separates from the adhesive.

In an embodiment of the first aspect of the present invention the device further comprising a tape reel holder for said protective tape.

### The second aspect of the present invention

In a second aspect the present invention relates to a system comprising a device according to the first aspect of the invention in combination with a set of two or more guide members, wherein in respect of two or more of said two or more guide members, the geometries and/or dimensions of said channel are different.

### The third aspect of the present invention

In a third aspect the present invention relates to a kit-of parts comprising a device according to the first aspect of the present invention in combination with one or more reels of adhesive tape; and wherein the geometry and the dimensions of said adhesive tape is adapted to the geometry and the dimensions of the tape slot of a guide member of said device; optionally further in combination with one or more reels of protective tape.

### The fourth aspect of the present invention

In a fourth aspect the present invention provides a use of a device according to the first aspect of the present invention; or of a system according to the second aspect of the present invention, or of a kit-of-parts according to the third aspect of the present invention for applying an adhesive to a longitudinal product.

### The fifth aspect of the present invention

In a fifth aspect the present invention provides method for applying an adhesive to a longitudinal product, wherein said method comprises the following steps:
i) providing a device according to the first aspect of the invention;
ii) via said tape slot inserting an end of the adhesive tape into the channel of the guide member of said device in such a way that the exposed adhesive of said adhesive tape, upon entering said channel, faces said first end of said channel;
iii) arranging said longitudinal product in said channel of said guide member;
iv) displacing said longitudinal product along said channel of said guide member, in a direction from said first end of said channel to said second end of said channel, thereby making said exposed adhesive of said adhesive tape adhere to said longitudinal product along a desired extension thereof;
v) cutting the adhesive tape once the desired extension of application has been reached.

In one embodiment of the method according to the fifth aspect, said longitudinal product is a flexible product, such as an electric cable, a data cable, a rubber seal; a tube or hose, such as a flexible tube or hose, such as a flexible tube for supplying medical quality air or oxygen to a patient; or wherein said longitudinal product is a non-flexible product, such as, extruded aluminium profile, a trim for windows or for floor panels.

### The sixth aspect of the present invention

In a sixth aspect the present invention relates to a longitudinal product comprising an adhesive tape along at least part of its longitudinal extension, wherein said adhesive tape comprises an adhesive which is being protected by a protective liner; wherein said longitudinal product is being a tube or hose, such as a flexible tube or hose, such as a flexible tube for supplying medical quality air or oxygen to a patient.

### The seventh aspect of the present invention

In a seventh aspect the present invention relates to a longitudinal product comprising an adhesive tape along at least part of its longitudinal extension, wherein said adhesive tape comprises an adhesive which is being protected by a protective liner; wherein said longitudinal product furthermore comprises a protective tape covering at least part of said protective liner of said adhesive tape.

In order to better illustrate the present invention and various embodiment thereof, reference is now made to the figures.

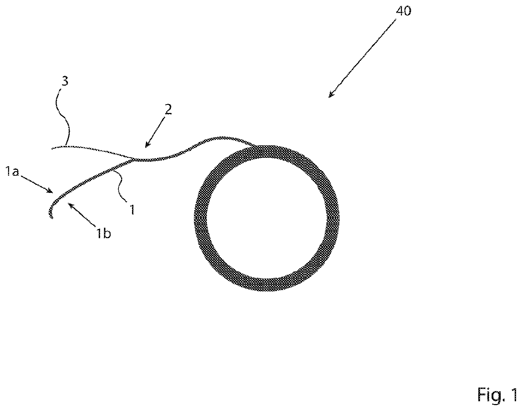

Fig. 1 is a plan view illustrating the concepts of adhesive, adhesive tape and reel of adhesive tape according to the preset invention.

Fig. 1 shows the reel 40 of adhesive tape 2. The reel 40 comprises an adhesive 1 which on one surface has been provided with a protective liner 3 and which has been wound into a reel. Upon unwinding the tape 2, the tape will comprise an exposed adhesive surface 1b of the adhesive 1. An opposite surface 1a of the adhesive 1 is covered with the protective liner 3.

When removing the protective liner 3 the adhesive surface 1a of the adhesive will be exposed, thus leaving the adhesive 1 exposed on one side 1a.

Examples of adhesive tapes which can be used with the present invention are of the type: foamed acrylic adhesive. Such tapes are marketed under the name of: VHB tape from 3M°, Tesa 4965, Nitto 5703LE or A7040CR from the Crown Adhesive company.

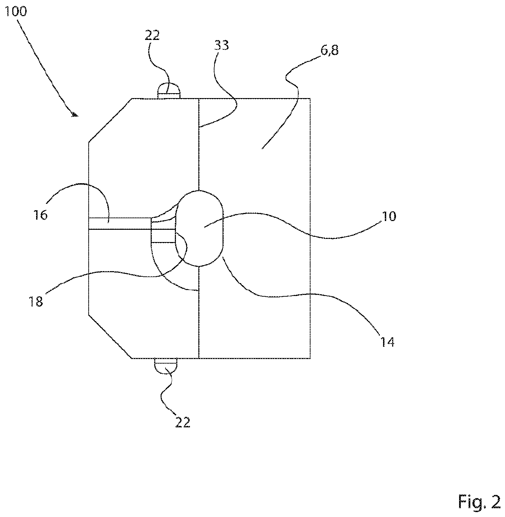

Fig. 2 is a plan view illustrating one embodiment of the device according to the invention in one of its most simple embodiments. The device is for applying an adhesive to a longitudinal product.

Fig. 2 shows the device 100 comprising a body 6 which comprises a guide member 8.

The guide member 8 comprises a channel 10 in the form of a through-going channel for receiving and guiding a longitudinal product through said guide member. The through-going channel 10 is having a first end 12 and a second end 14. The second end 14 of the through-going channel 10 faces in Fig. 2 the viewer and the first end 12 is arranged opposite to the second end 14. The through-going channel 10 is for receiving and guiding a longitudinal product through the guide member 8.

It is seen in Fig. 2 that the though-going channel 10 comprises an inner guide surface 18. It is also seen that a tape slot 16 extends into the inner guide surface 18 of the through-going channel 10. Thereby it is possible to feed an adhesive tape 2, via the tape slot 16, into the through-going channel 10 of the guide member 8.

In the process of applying an adhesive to a longitudinal product an end of the adhesive tape 2 is introduced into the tape slot 16 and it is pushed further into the though-going channel 10 of the guide member 8 in such an orientation that the exposed adhesive 1,1b of the adhesive tape 2 faces the first end 12 of the through-going channel 10.

Subsequently, an end of a longitudinal product 4 is inserted into the first end 12 of the through-going channel 10 of the guide member 8.

By displacing the longitudinal product 4 through the through-going channel 10 of the guide member 8, in a direction from said first end 12 to said second end 14, the exposed adhesive 1 of the adhesive tape 2 will adhere to the longitudinal product 4. This is brought about by help of the inner guide surface 18 of the through-going channel 10 in that this inner guide surface 18 aids in pressing the exposed adhesive 1 of the adhesive tape 2 against the longitudinal product.

Once a desired length of the longitudinal product 4 has been applied with adhesive tape 2 the adhesive tape 2 is cut and the longitudinal product can be removed from the device 100.

Hereby the longitudinal product will be applied with an adhesive, where one surface 1b of the adhesive 1 adheres to the longitudinal product 4 and the opposite surface 1a of the adhesive 1 is protected by a protective liner 3.

When the longitudinal product 4 is to be adhered to a surface, the protective liner 3 is simply removed, thereby exposing the adhesive surface 1a of the adhesive 1, and by pressing this exposed adhesive against a surface, the longitudinal product 4 will be adhered to that surface.

Fig. 2 shows that the through-going channel 10 is having an essentially linear extension through the guide member 8.

Fig. 2 also shows that the tape slot 16 extends into the through-going channel 10 in a direction essentially perpendicular to the linear extension of the through-going channel 10.

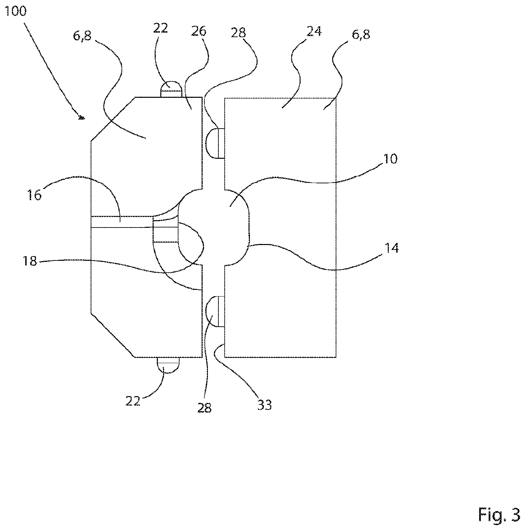

Fig. 3 is a plan view illustrating the embodiment of Fig. 2 in a disassembled state. Accordingly, Fig. 3 shows that the guide member 8 of device 100 comprising the body 6 can be taken apart in two separate guide member parts, viz. a first guide member part 24 and a second guide member part 26.

Fig. 3 illustrates that the first guide member part 24 comprises a first guide member engagement means 28. These first guide member engagement means 28 are configured to enter into engagement with a second guide member engagement means 30 in the form of corresponding holes arranged in the second guide member part 26 (not seen in fig. 3).

Providing these guide members with engagement means 28,30 allows the two guide member parts 24,26 to be attached to each other so as allowing that these guide member parts 24,26 retain their orientation relative to each other.

Fig. 2 and 3 show that the guide member 8 is being divided into the first guide member part 24 and said second guide member part 26 at an interphase 33, the interphase is being arranged along the channel 10.

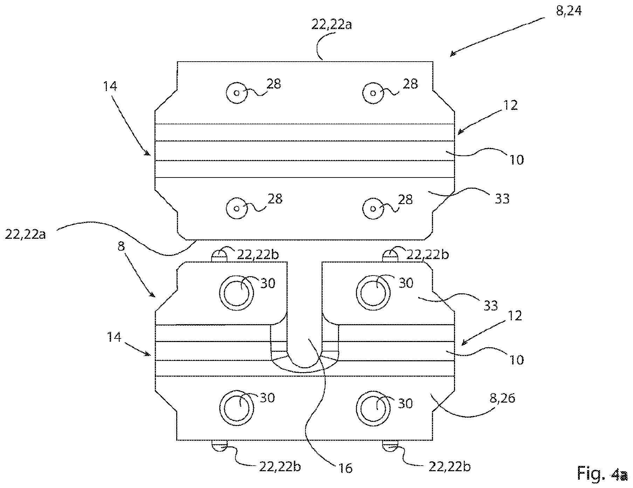

Fig. 4a is a plan view illustrating the first guide member part 24 and the second guide member part 26 of the guide member 8 in a disassembled state. Again, it is seen that the guide member 8 comprising the two guide member parts 24 and 26 comprises a channel 10 having a first end 12 and a second end 14.

The two guide member parts 24 and 26 are configured to be assembled into an assembled guide member 8 by making the interface surface 33 of the two guide member parts 24 and 26 face each other.

In doing so, the protrusions of the first guide member engagement means 28 will engage with the holes 30 of the second guide member engagement means 30, thereby holding the first guide member part 24 and the second guide member part 26 of the guide member 8 into a fixed position in relation to each other.

Fig. 4a also shows the second guide member attachment means 22,22b of the second guide member part 26. These means 22,22b are configured to engage with body attachment means 20 of the body 6 of the device 100.

The first guide member attachment means 22,22a of the first guide member part 24 simply comprises the shape of the sides of the second guide member part 24 which will enter into engagement with the body 6 of the device 100 and will be hold in place solely by friction.

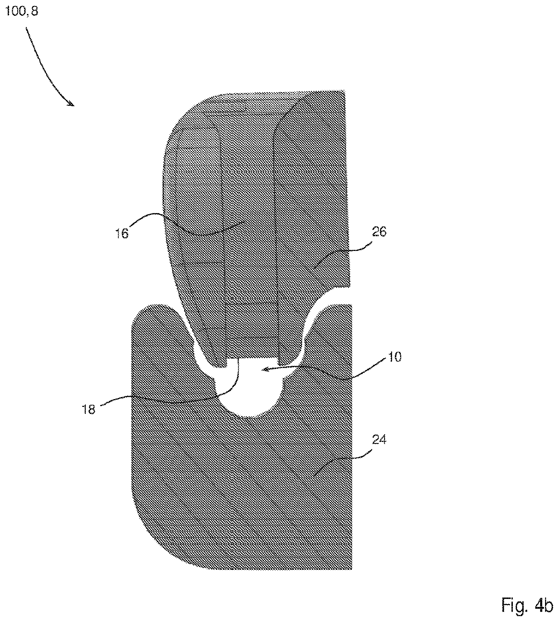

Fig. 4b is a cross-sectional view illustrating the first guide member part and the second guide member part of an alternative embodiment of the first aspect of the invention.

Fig. 4b shows the first guide member part 24 and the second guide member part 26 of a guide member 8, which are shaped so as form the channel 10 for a longitudinal product along a surface of each of the two guide member parts 24,26.

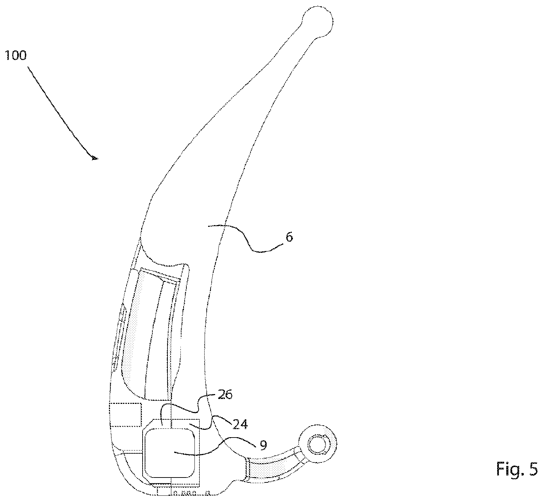

Fig. 5 is a cross-sectional view illustrating another embodiment of the device of the invention.

Fig 5 shows the device 100 comprising the body 6. The device 100 in fig. 5 comprises the guide member area 9 for accommodating the detachable guide member 8 illustrated in Fig. 2, 3 and 4.

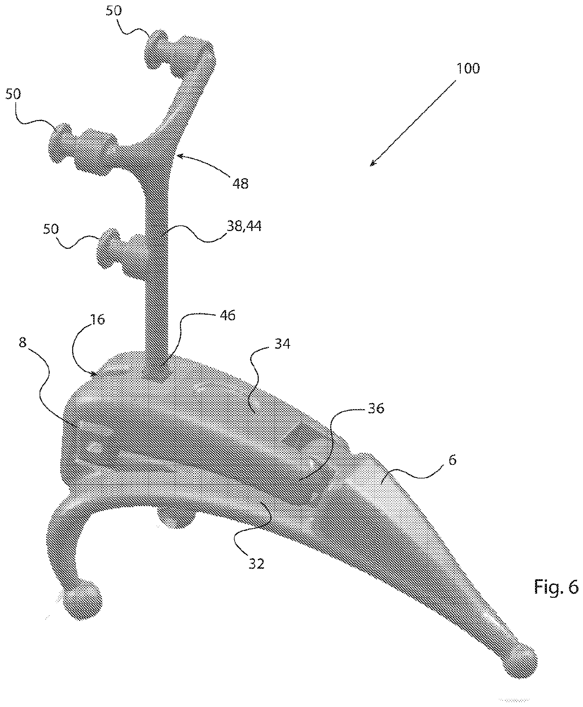

Fig. 6 is a perspective view illustrating yet another embodiment of the device of the invention.

The embodiment shown in Fig. 6 corresponds to the embodiment of Fig. 5. However, in Fig. 6 the device 100 has been provided with a tape reel holder 38 for holding a reel 40 of adhesive tape 2. The tape reel holder comprises a post 44 having a proximal portion 46 and a distal portion 48, wherein the proximal portion is being attached to the body 6 of the device. It is seen that the distal portion 48 comprises reel holding means 50. The reel holding means is configured to allow a tape reel, once being mounted on the tape reel holder 38, to rotate relative to the post 44.

The tape reel holder 38 is having an orientation relative to the tape slot 16 of the guide member 8 in a way enabling that once being loaded with a reel 40 of tape 2, the reel 40 of tape defines a plane which essentially intersects the tape slot 16.

Hereby, the adhesive tape 2 can be guided without excessive bends into the tape slot 16.

The body 6 of the device illustrated in Fig. 6 comprises a first body member 32 and a second body member 34. The first body member 32 and the second body member 34 are pivotally mounted to each other around a pivoting point 36. Hereby the device 100 can attain an open configuration and a closed configuration.

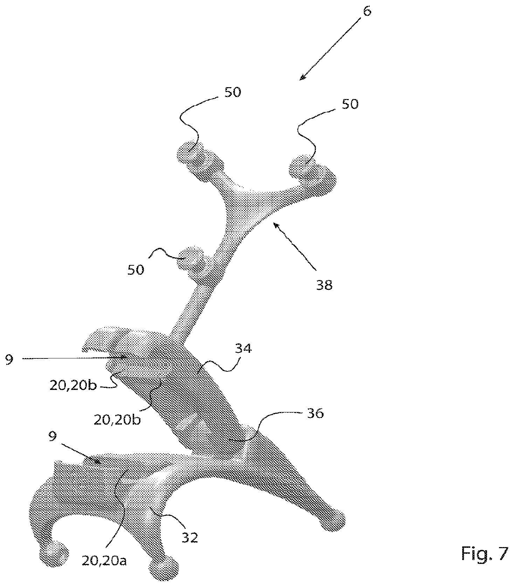

This is further illustrated in Fig. 7.

Fig. 7 is a perspective view illustrating the embodiment of Fig. 6 as seen from another perspective and without the guide member 8.

Fig. 7 shows that the first body member 32 and a second body member 34 been pivotally rotated slightly in relation to each other around pivoting point 36. Hereby the first body member 32 and the second body member 34 are brought into an open configuration in relation to each other.

It is seen in Fig. 7 that the first body member 32 and the second body member 34 each comprises a guide member area 9 for accommodating a first guide member part 24 and a second guide member part 26, respectively. The shape of the lower guide member area 9 defines the first body attachment means 20,20a for holding the first guide member part 26 into place solely via friction.

The upper guide member area 9 comprises the second body attachment means 20,20b for holding the second guide member part 26 into place.

This embodiment is advantageous because it allows a longitudinal product to be applied with an adhesive even though that product is having an end which is too big to enter the first or second end 12,14 of the channel 10 of the guide member 8. In such a situation the longitudinal product is arranged along the longitudinal channel 10 between the first guide member part 24 and the second guide member part 26 in their open configuration. Subsequently these two guide member parts 24,26 will be brought together in their closed configuration and the application of the adhesive 1 can commence by displacing the longitudinal product 4.

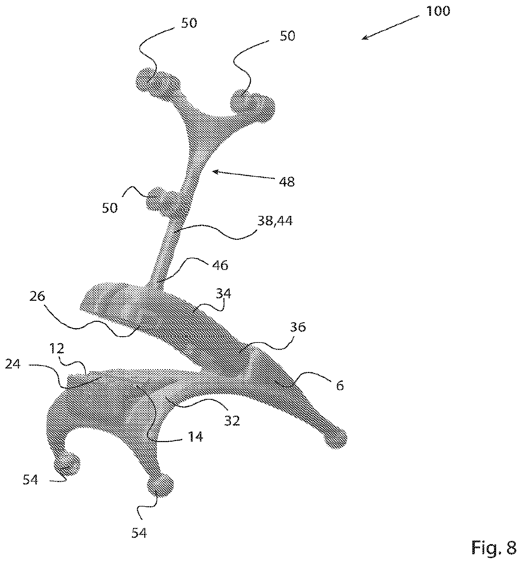

Fig. 8 is a perspective view of the embodiment illustrated in Fig. 7. In Fig. 8 the first guide member part 24 and the second guide member part 26 have been inserted into the respective guide member area 9 of the first body member 32 and the second body member 34, respectively.

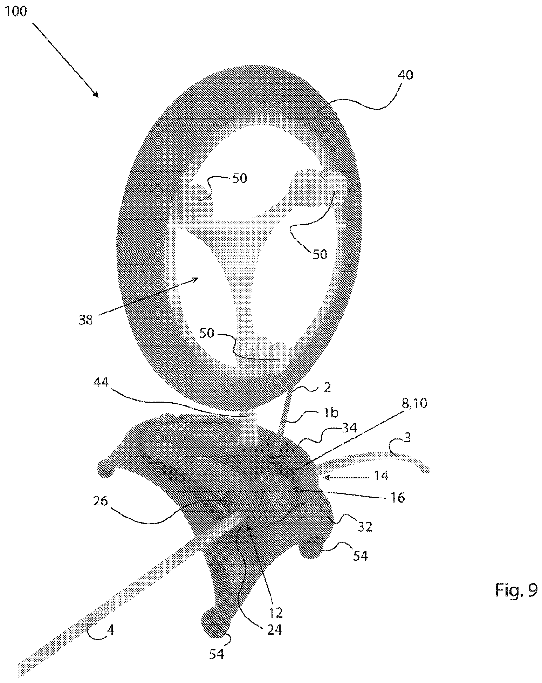

Fig. 9 is a photograph illustrating the use of the device according to the first aspect in the process of applying an adhesive to a longitudinal product.

Fig. 9 shows the device 100 comprising a first body member 32, a second body member 34 and a tape reel holder 38 comprising a post 44 and reel holding means 50 for holding a reel 40 of adhesive tape 2. The device also comprises a guide member 8 comprising guide member parts 24, 26 (barely seen in Fig. 9 between the front of first body member 32 and second body member 34).

In Fig. 9 it is seen that the adhesive tape 2 has been pulled off the reel 40 and guided into the tape slot 16 of the guide member 8. Hereby an adhesive surface 1b of the adhesive tape 2 will be exposed. The adhesive surface 1b of the adhesive tape 2 faces, in the tape slot 16, the first end 12 of the channel 10 of the guide member 8.

The longitudinal member 4 in the form of an electric cable has been inserted into the first end 12 of the guide member 8 and the cable 4 has been displaced through the channel 10 in a direction from the first end 12 to the second end 14.

Hereby the adhesive tape 2 will be applied to the cable 4, yet still with its protective liner 3 attached.

Once a desirably length of the cable has been applied with adhesive 1, the adhesive tape 2 is cut and the cable 4 with the adhesive 1 covered by the protective liner 3 can be removed from the device 100.

Upon removing the protective liner 3, another adhesive surface 1a of the adhesive 1 will be exposed and the cable 4 can be adhered to a surface, wherever desired.

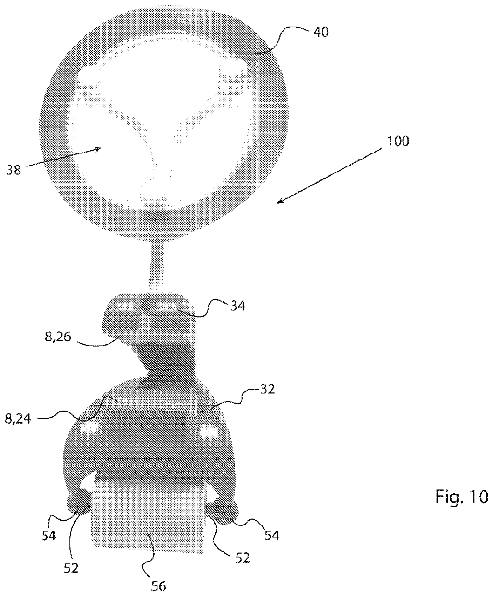

Fig. 10 is a photograph illustrating the device 100 according to the first aspect of the present invention.

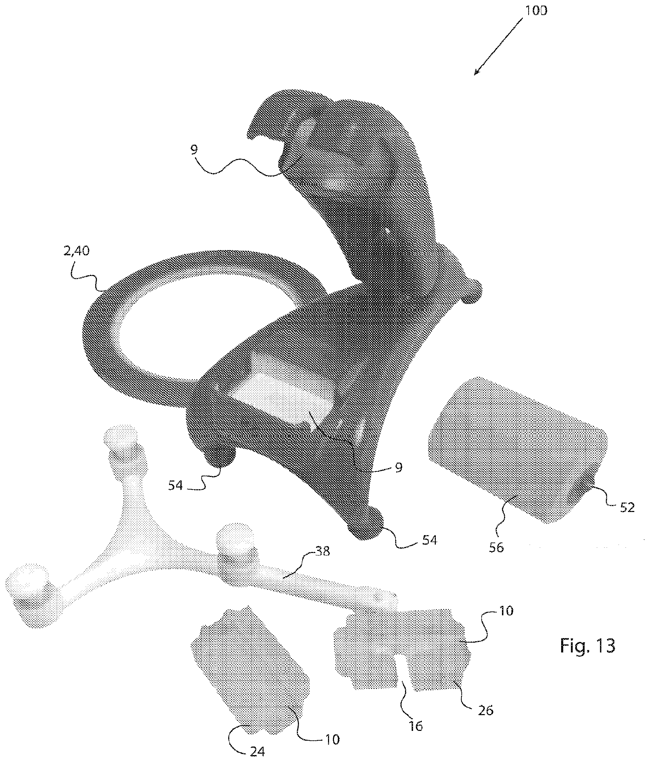

Fig. 10 shows that the device 100 has been provided with a roller 56. The roller 56 comprises first attachment means 52 which are configured to be clipped onto second attachment means 54 provided on the body 6 of the device 100. The first attachment means 52 are also seen in Fig. 13 and the second attachment means 54 are seen Fig. 8, 9, 10 and 13.

Providing the device 100 with a roller enables application of pressure to the adhesive of the longitudinal product upon fastening that product to a surface.

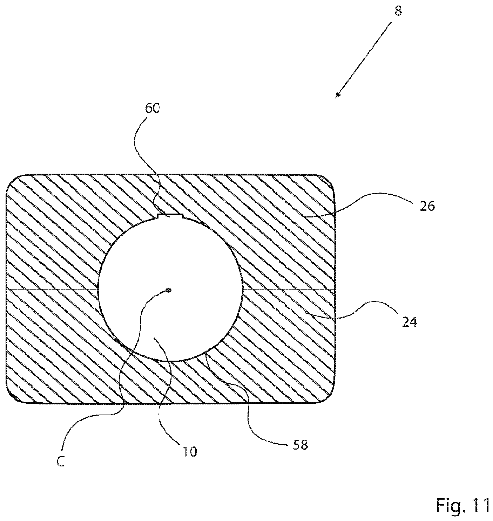

Fig. 11 is a cross-sectional view of an embodiment of the guide member of the device according to the present invention.

Fig. 11 shows that the cross-section of the channel 10 of the guide member 8 comprises an essential circular curve 58 comprising a notch 60. The notch 60 extends away from the center C of the circular curve and into the material of the guide member.

It is preferred that the notch 60 extends all the way along the channel 10 of the guide member 8 in a linear extension.

It is also preferred that the notch 60 is arranged at that longitudinal part of the surface of the channel 10 corresponding to the location of the tape slot 16.

Hereby, the longitudinal notch 60 will help guiding the location of application of an adhesive tape 2 upon using the device according to the invention on a cylindrical product 4 having a circular cross-section. Once an adhesive 2 tape is applied in a cylindrical product 4, that adhesive tape will take up the space defined by the notch 60 and thus prevent any rotation of the cylindrical product upon application of the adhesive tape. Thereby it is ensured that the adhesive tape 2 will be applied on the cylindrical product in a linear fashion, rather than being applied in a non-linear, such as a spiraling fashion.

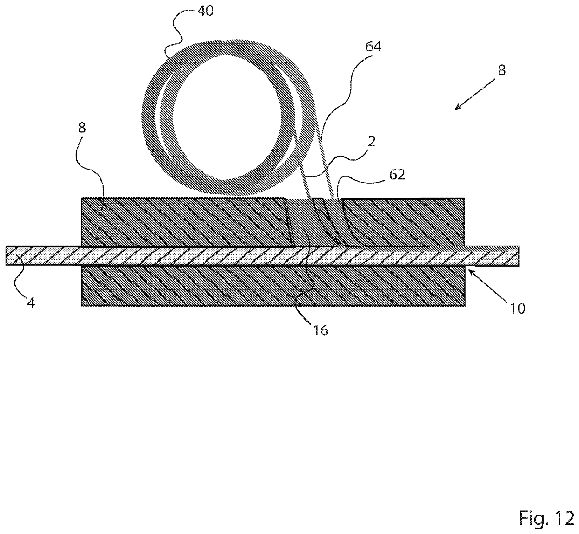

Fig. 12 is a cross-sectional view illustrating the principle of a special embodiment of the guide member of the device according to the invention.

Fig. 12 shows the guide member 8 comprising a channel 10 and a tape slot 16 extending through the material of the guide member 8 into the channel 10. In the channel 10 a longitudinal product 4 has been inserted with the view to apply this product with an adhesive tape 2 originating from the reel 40.

Fig. 12 also shows that an auxiliary tape slot 62 has been provided in the guide member 8. The auxiliary tape slot 62 extends into the channel 10 through the material of the guide member 8 at a position next to the tape slot 16.

Hereby a protective tape 64 can be applied on top of the adhesive tape 2 which has been applied to the longitudinal product 4.

This embodiment is advantageous in case it is desired to provide a longitudinal member 4 with an adhesive tape, but which is intended for being stored for prolonged periods of time until use.

As moving around and subjecting the longitudinal member 4 including its applied adhesive tape 2 for various types of stresses may cause the protective liner 3 to bend and/or come lose it is advantageous to provide the longitudinal product with the protective tape 62 in order to prevent such situations.

Fig. 13 is a photograph illustrating the device 100 according to the first aspect of the present invention in a disassembled state. The various parts making up the device of the present invention may suitably be manufactured from plastic or metal, such as by molding or by 3D printing.

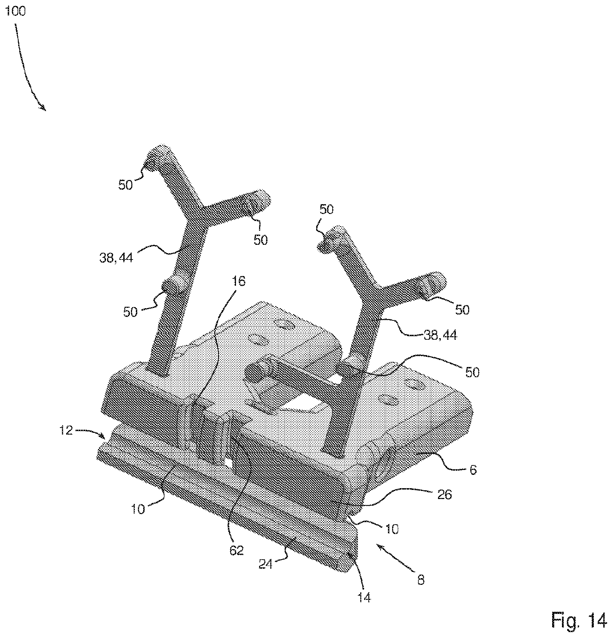

Fig. 14 is a perspective view illustrating an embodiment of the device according to the first aspect of the present invention comprising an auxiliary tape slot for a protective tape in addition to a tape slot for the adhesive tape to be applied to a longitudinal product.

Fig. 14 accordingly shows the device 100 comprising a first guide member part 24 which is pivotally connected to the body 6 which integrated therewith comprises the second guide member part 26.

The guide member 6 comprising the first guide member part 24 and the second guide member part 26 comprises a tape slot 16 for an adhesive tape as well as auxiliary tape slot 62 for a protective tape to be applied on top of the adhesive tape onto a longitudinal product.

Also seen in Fig. 14 are two tape reel holders 38 for these two types of tape. The tape reel holders 38 comprise reel holding means 50.

### List of reference numerals

- 1: Adhesive
- 1a: First adhesive surface of adhesive
- 1b: Second adhesive surface of adhesive
- 2: Adhesive tape
- 3: Protective liner of adhesive tape
- 4: Longitudinal product
- 6: Body of device
- 8: Guide member
- 9: Guide member area of body
- 10: Channel of guide member
- 12: First end of channel
- 14: Second end of channel
- 16: Tape slot
- 18: Inner guide surface of channel
- 20: Body attachment means
- 20a: First body attachment means
- 20b: Second body attachment means
- 22: Guide member attachment means
- 22a: First guide member attachment means
- 22b: Second guide member attachment means
- 24: First guide member part
- 26: Second guide member part
- 28: First guide member engagement means
- 30: Second guide member engagement means
- 32: First body member
- 33: Interphase between first guide member part and second guide member part and
- 34: Second body member
- 36: Pivoting point
- 38: Tape reel holder
- 40: Reel of adhesive tape
- 42: Plane defined by reel of adhesive tape
- 44: Post of tape reel holder
- 46: Proximal portion of post
- 48: Distal portion of post
- 50: Reel holding means
- 52: First roller attachment means
- 54: Second roller attachment means
- 56: Detachable roller
- 58: Circular curve of cross-section of channel of guide member
- 60: Longitudinal notch in channel of guide member
- 62: Auxiliary tape slot
- 64: Protective Tape
- 100: Device
- 200: System
- 300: Kit-of-parts
- C: Center of circular curve of cross-section of channel of guide member

## Claims

1. A device (100) for applying an adhesive (1) to a longitudinal product (4), said device comprises:
a body (6) comprising a guide member (8); wherein said guide member (8) comprises a channel (10) for receiving and guiding a longitudinal product in relation to said guide member, said channel (10) is having a first end (12) and a second end (14);
wherein said guide member (8) comprises a tape slot (16) for guiding an adhesive tape (2) into said channel (10);
wherein said channel (10) comprises a guide surface (18); and wherein said tape slot (16) extends through at least part of the material of said guide member (8) and into said guide surface (18) of said channel (10), thereby allowing feeding an adhesive tape (2) through the material of said guide member (8) and into said channel (10) of said guide member (8) wherein said guide member (8) comprises a first guide member part (24) and a second guide member part (26);
**characterised in that** said guide member (8) is being divided into said first guide member part (24) and said second guide member part (26) which are separate and can be taking apart at an interphase (33), said interphase is being arranged along said channel (10), thereby intersecting said channel (10) along a longitudinal direction thereof.

2. A device (100) according to claim 1, wherein said channel (10) of said guide member (8) is having an essentially linear extension; and/or
wherein said channel (10) of said guide member (8) is a through-going channel extending through the material of said guide member; or is a channel (10) in a form of a recess arranged at a surface of said guide member; and/or
wherein said channel (10) is having a cross-sectional geometry selected from the group of geometries of: a circle, an oval, a triangle, a rectangle, such as a square, or a hexagonal.

3. A device (100) according to any of the claims 1 - 2, wherein said guide member (8) is integrated with said body (6) of said device; or
wherein said guide member (8) is configured to be detachable mounted to said body (6) of said device; optionally wherein said body (6) of said device comprises a body attachment means (20), and wherein said guide member (8) comprises guide member attachment means (22); wherein said body attachment means (20) and said guide member attachment means (22) are adapted to be able to detachably enter into engagement with each other, thereby enabling exchange of said guide member (8) on said body (6).

4. A device (100) according to any of the preceding claims, wherein said first guide member part (24) comprises a first guide member engagement means (28), and wherein said second guide member part (26) comprises a second guide member engagement means (30); wherein said first guide member engagement means (28) and said second guide member engagement means (30) are configured to detachably enter into engagement with each other.

5. A device (100) according to any of the preceding claims, wherein said body (6) comprises a first body member (32) and a second body member (34); wherein said first body member (32) and said second body member (34) are being attached to each other in a pivoting fashion around a pivoting point (36), thereby forming two jaws which, by rotation relative to each other, are configured to enable changing the configuration of said device between an open configuration and a closed configuration;
optionally wherein said first body member (32) comprises first body attachment means (20a); and wherein said second body member (34) comprises second body attachment means (20b); wherein said first guide member part (24) comprises a first guide member attachment means (22a), wherein said second guide member part (26) comprises a second guide member attachment means (22b); wherein said first body attachment means (20a) is being configured to detachably enter into engagement with said first guide member attachment means (22a); and wherein said second body attachment means (20b) is being configured to detachably enter into engagement with said second guide member attachment means (22b), wherein said channel (10) thereby is being formed upon bringing said device into its closed configuration;
or optionally wherein said first body member (32) comprises first body attachment means (20a), wherein said first guide member part (24) comprises a first guide member attachment means (22a); wherein said first body attachment means (20a) is being configured to detachably enter into engagement with said first guide member attachment means (22a); and wherein said second guide member part (26) is integrated into said second body member (34).

6. A device (100) according to any of the preceding claims, wherein said tape slot (16) is a closed tape slot allowing access into said channel (10) only from an end opening of said tape slot arranged opposite to the entry of said tape slot (16) into said channel (10) in said guide member (8); or wherein said tape slot (16) is an open tape slot, further allowing access into said channel (10) along the extension of said tape slot (16).

7. A device (100) according to any of the preceding claims, wherein the cross-section of said channel (10) of said guide member (8) comprises an essential circular curve (58) comprising a notch (60), wherein said notch extends away from the center (C) of said circular curve and into the material of said guide member (8);
optionally wherein said notch (60) extends all the way along the longitudinal direction of said channel (10);
and/or optionally wherein said notch (60) is arranged at that longitudinal part of the surface of said channel (10) corresponding to the location of the entry of said tape slot (16).

8. A device (100) according to claim 5, wherein said first body member (32) and/or said second body member (34) comprises a longitudinal recess, thereby forming said guide member (8) as an integral part of said body (6); wherein said recess(s) thereby define(s) said channel (10), when said first body member (32) and said second body member (34) are being brought into their closed configuration;
optionally wherein said first body member (32) and said second body member (34) comprises engagement means (28,30) configured to enter into engagement with each other upon bringing said first body member (32) and said second body member (34) into their closed configuration, thereby preventing any lateral movement of the first body member (32) and said second body member (34) relative to each other when being in their closed configuration.

9. A device (100) according to any of the preceding claims, wherein said device furthermore comprises a tape reel holder (38) for holding a reel (40) of adhesive tape (2);
wherein said tape reel holder (38) optionally is having an orientation, relative to said tape slot (16) of said guide member (8) in a way enabling that once being loaded with a reel of adhesive tape (2), said reel (40) of adhesive tape defines a plane which essentially intersects said tape slot (16); and/or
wherein said tape reel holder (38) optionally comprises a post (44) having a proximal portion (46) and a distal portion (48), wherein said proximal portion is being attached to said body (6) of said device and wherein said distal portion comprises reel holding means (50), wherein said reel holding means is configured to allow a tape reel (40), once being mounted on said tape reel holder (38), to rotate relative to said post;
or
wherein said device further is comprising a roller (56), wherein said roller comprises first roller attachment means (52), and wherein said body (6) comprises second roller attachment means (54), wherein said first roller attachment means (52) are configured to detachably enter into engagement with said second roller attachment means (54).

10. A device (100) according to any of the preceding claims, wherein said guide member (8) comprises an auxiliary tape slot (62) for guiding a protective tape (64) into said channel (10), said auxiliary tape slot (62) extends through the material of the guide member (8) into said channel (10) at a position next to the said tape slot (16); optionally further comprising a tape reel holder for said protective tape (64).

11. A system (200) comprising a device (100) according to any of the claims 1 - 10 in combination with a set of two or more guide members (8), wherein in respect of two or more of said two or more guide members, the geometries and/or dimensions of said channel (10) are different.

12. A kit-of parts (300) comprising a device (100) according to any of the claims 1 - 10 in combination with one or more reels (40) of adhesive tape (2); and wherein the geometry and the dimensions of said adhesive tape (2) is adapted to the geometry and the dimensions of the tape slot (16) of a guide member (8) of said device; optionally further in combination with one or more reels of protective tape (64).

13. Use of a device (100) according to any of the claims 1 - 10; or of a system (200) according to claim 11, or of a kit-of-parts (300) according to claim 12 for applying an adhesive (1) to a longitudinal product (4).

14. A method for applying an adhesive (1) to a longitudinal product (4), wherein said method comprises the following steps:
i) providing a device (100) according to any of the claims 1-10;
ii) via said tape slot (16) inserting an end of the adhesive tape (2) into the channel (10) of the guide member (8) of said device in such a way that the exposed adhesive (1) of said adhesive tape (2), upon entering said channel (10), faces said first end (12) of said channel (10);
iii) arranging said longitudinal product (4) in said channel (10) of said guide member (8);
iv) displacing said longitudinal product (4) along said channel (10) of said guide member (8), in a direction from said first end (12) of said channel to said second end (14) of said channel, thereby making said exposed adhesive (1) of said adhesive tape (2) adhere to said longitudinal product (4) along a desired extension thereof;
v) cutting the adhesive tape (2), once the desired extension of application has been reached.

15. A method according to claim 14, wherein said longitudinal product (4) is a flexible product, such as an electric cable, a data cable, a rubber seal; a tube or hose, such as a flexible tube or hose, such as a flexible tube for supplying medical quality air or oxygen to a patient; or wherein said longitudinal product (4) is a non-flexible product, such as, extruded aluminium profile, a trim for windows or for floor panels.

## Patentansprüche

1. Vorrichtung (100) zum Auftragen eines Klebstoffs (1) auf ein längliches Produkt (4), wobei die Vorrichtung Folgendes umfasst:
einen Körper (6), der ein Führungselement (8) umfasst; wobei das Führungselement (8) einen Kanal (10) zum Aufnehmen und Führen eines länglichen Produkts in Bezug auf das Führungselement umfasst, wobei der Kanal (10) ein erstes Ende (12) und ein zweites Ende (14) aufweist;
wobei das Führungselement (8) einen Bandschlitz (16) zum Führen eines Klebebandes (2) in den Kanal (10) umfasst;
wobei der Kanal (10) eine Führungsoberfläche (18) umfasst; und wobei sich der Bandschlitz (16) durch mindestens einen Teil des Materials des Führungselements (8) und in die Führungsoberfläche (18) des Kanals (10) erstreckt, wodurch ein Zuführen eines Klebebandes (2) durch das Material des Führungselements (8) und in den Kanal (10) des Führungselements (8) ermöglicht wird, wobei das Führungselement (8) einen ersten Führungselementteil (24) und einen zweiten Führungselementteil (26) umfasst;
**dadurch gekennzeichnet, dass**
das Führungselement (8) in das erste Führungselementteil (24) und das zweite Führungselementteil (26) unterteilt ist, die getrennt sind und an einer Zwischenphase (33) auseinandergenommen werden können, wobei die Zwischenphase entlang des Kanals (10) angeordnet ist, wodurch sie den Kanal (10) entlang einer Längsrichtung davon schneidet.

2. Vorrichtung (100) nach Anspruch 1, wobei der Kanal (10) des Führungselements (8) eine im Wesentlichen lineare Erstreckung aufweist; und/oder
wobei der Kanal (10) des Führungselements (8) ein durchgehender Kanal ist, der sich durch das Material des Führungselements erstreckt; oder ein Kanal (10) in einer Form einer Vertiefung ist, die an einer Oberfläche des Führungselements angeordnet ist; und/oder
wobei der Kanal (10) eine Querschnittsgeometrie aufweist, die aus der Gruppe der folgenden Geometrien ausgewählt ist: ein Kreis, ein Oval, ein Dreieck, ein Rechteck, wie etwa ein Quadrat, oder ein Sechseck.

3. Vorrichtung (100) nach einem der Ansprüche 1 - 2, wobei das Führungselement (8) in den Körper (6) der Vorrichtung integriert ist; oder
wobei das Führungselement (8) dazu konfiguriert ist, lösbar an dem Körper (6) der Vorrichtung montiert zu sein; wobei optional der Körper (6) der Vorrichtung ein Körperbefestigungsmittel (20) umfasst und wobei das Führungselement (8) Führungselementbefestigungsmittel (22) umfasst; wobei das Körperbefestigungsmittel (20) und die Führungselementbefestigungsmittel (22) so ausgelegt sind, dass sie in der Lage sind, lösbar miteinander in Eingriff zu treten, wodurch ein Austausch des Führungselements (8) an dem Körper (6) ermöglicht wird.

4. Vorrichtung (100) nach einem der vorhergehenden Ansprüche, wobei der erste Führungselementteil (24) ein erstes Führungselementeingriffsmittel (28) umfasst und wobei der zweite Führungselementteil (26) ein zweites Führungselementeingriffsmittel (30) umfasst; wobei das erste Führungselementeingriffsmittel (28) und das zweite Führungselementeingriffsmittel (30) dazu konfiguriert sind, lösbar in Eingriff miteinander zu treten.

5. Vorrichtung (100) nach einem der vorhergehenden Ansprüche, wobei der Körper (6) ein erstes Körperelement (32) und ein zweites Körperelement (34) umfasst; wobei das erste Körperelement (32) und das zweite Körperelement (34) auf eine schwenkbare Art um einen Schwenkpunkt (36) aneinander befestigt sind, wodurch zwei Backen gebildet werden, die dazu konfiguriert sind, durch Drehung relativ zueinander eine Änderung der Konfiguration der Vorrichtung zwischen einer offenen Konfiguration und einer geschlossenen Konfiguration möglich zu machen;
wobei optional das erste Körperelement (32) ein erstes Körperbefestigungsmittel (20a) umfasst; und wobei das zweite Körperelement (34) ein zweites Körperbefestigungsmittel (20b) umfasst; wobei der erste Führungselementteil (24) ein erstes Führungselementbefestigungsmittel (22a) umfasst, wobei der zweite Führungselementteil (26) ein zweites Führungselementbefestigungsmittel (22b) umfasst; wobei das erste Körperbefestigungsmittel (20a) dazu konfiguriert ist, lösbar mit dem ersten Führungselementbefestigungsmittel (22a) in Eingriff zu treten; und wobei das zweite Körperbefestigungsmittel (20b) dazu konfiguriert ist, lösbar mit dem zweiten Führungselementbefestigungsmittel (22b) in Eingriff zu treten, wobei der Kanal (10) dadurch bei Bringen der Vorrichtung in ihre geschlossene Konfiguration gebildet wird;
oder wobei optional das erste Körperelement (32) ein erstes Körperbefestigungsmittel (20a) umfasst, wobei das erste Führungselementteil (24) ein erstes Führungselementbefestigungsmittel (22a) umfasst; wobei das erste Körperbefestigungsmittel (20a) dazu konfiguriert ist, lösbar mit dem ersten Führungselementbefestigungsmittel (22a) in Eingriff zu treten; und wobei das zweite Führungselementteil (26) in das zweite Körperelement (34) integriert ist.

6. Vorrichtung (100) nach einem der vorhergehenden Ansprüche, wobei der Bandschlitz (16) ein geschlossener Bandschlitz ist, der Zugang zu dem Kanal (10) nur von einer Endöffnung des Bandschlitzes aus ermöglicht, die gegenüber dem Eingang des Bandschlitzes (16) in den Kanal (10) in dem Führungselement (8) angeordnet ist; oder wobei der Bandschlitz (16) ein offener Bandschlitz ist, der ferner Zugang zu dem Kanal (10) entlang der Erstreckung des Bandschlitzes (16) ermöglicht.

7. Vorrichtung (100) nach einem der vorhergehenden Ansprüche, wobei der Querschnitt des Kanals (10) des Führungselements (8) eine im Wesentlichen kreisförmige Kurve (58) umfasst, die eine Kerbe (60) umfasst, wobei die Kerbe sich von der Mitte (C) der kreisförmigen Kurve weg und in das Material des Führungselements (8) hinein erstreckt;
wobei sich die Kerbe (60) optional über die gesamte Längsrichtung des Kanals (10) erstreckt;
und/oder wobei optional die Kerbe (60) an dem länglichen Teil der Oberfläche des Kanals (10) angeordnet ist, der der Stelle des Eingangs des Bandschlitzes (16) entspricht.

8. Vorrichtung (100) nach Anspruch 5, wobei das erste Körperelement (32) und/oder das zweite Körperelement (34) eine längliche Aussparung umfasst, wodurch das Führungselement (8) als integraler Teil des Körpers (6) gebildet wird; wobei die Aussparung(en) dadurch den Kanal (10) definiert/definieren, wenn das erste Körperelement (32) und das zweite Körperelement (34) in ihre geschlossene Konfiguration gebracht sind;
wobei optional das erste Körperelement (32) und das zweite Körperelement (34) Eingriffsmittel (28,30) umfassen, die dazu konfiguriert sind, in Eingriff miteinander zu treten, wenn das erste Körperelement (32) und das zweite Körperelement (34) in ihre geschlossene Konfiguration gebracht sind, wodurch jegliche seitliche Bewegung des ersten Körperelements (32) und des zweiten Körperelements (34) relativ zueinander verhindert wird, wenn sie sich in ihrer geschlossenen Konfiguration befinden.

9. Vorrichtung (100) nach einem der vorhergehenden Ansprüche, wobei die Vorrichtung ferner noch einen Bandrollenhalter (38) zum Halten einer Rolle (40) Klebeband (2) umfasst;
wobei der Bandrollenhalter (38) optional eine Ausrichtung relativ zu dem Bandschlitz (16) des Führungselements (8) derart aufweist, dass es möglich gemacht wird, dass, nachdem er mit einer Rolle Klebeband (2) bestückt wurde, die Rolle (40) Klebeband eine Ebene definiert, die den Bandschlitz (16) im Wesentlichen schneidet; und/oder
wobei der Bandrollenhalter (38) optional einen Ständer (44) umfasst, der einen proximalen Abschnitt (46) und einen distalen Abschnitt (48) aufweist, wobei der proximale Abschnitt an dem Körper (6) der Vorrichtung befestigt ist und wobei der distale Abschnitt ein Rollenhaltemittel (50) umfasst, wobei das Rollenhaltemittel dazu konfiguriert sind, es einer Bandrolle (40) zu ermöglichen, sobald sie an dem Bandrollenhalter (38) montiert ist, sich relativ zu dem Ständer zu drehen;
oder
wobei die Vorrichtung ferner eine Walze (56) umfasst, wobei die Walze erste Walzenbefestigungsmittel (52) umfasst, und wobei der Körper (6) zweite Walzenbefestigungsmittel (54) umfasst, wobei die ersten Walzenbefestigungsmittel (52) dazu konfiguriert sind, lösbar mit den zweiten Walzenbefestigungsmitteln (54) in Eingriff zu treten.

10. Vorrichtung (100) nach einem der vorhergehenden Ansprüche, wobei das Führungselement (8) einen zusätzlichen Bandschlitz (62) zum Führen eines Schutzbandes (64) in den Kanal (10) umfasst, wobei sich der zusätzliche Bandschlitz (62) durch das Material des Führungselements (8) in den Kanal (10) an einer Stelle neben dem Bandschlitz (16) erstreckt; optional ferner einen Bandrollenhalter für das Schutzband (64) umfassend.

11. System (200), umfassend eine Vorrichtung (100) nach einem der Ansprüche 1 - 10 in Kombination mit einem Satz von zwei oder mehreren Führungselementen (8), wobei die Geometrien und/oder Abmessungen des Kanals (10) in Bezug auf zwei oder mehrere der zwei oder mehreren Führungselemente unterschiedlich sind.

12. Teilesatz (300), umfassend eine Vorrichtung (100) nach einem der Ansprüche 1 - 10 in Kombination mit einer oder mehreren Rollen (40) Klebeband (2); und wobei die Geometrie und die Abmessungen des Klebebandes (2) an die Geometrie und die Abmessungen des Bandschlitzes (16) eines Führungselements (8) der Vorrichtung angepasst sind; optional ferner in Kombination mit einer oder mehreren Rollen Schutzband (64).

13. Verwendung einer Vorrichtung (100) nach einem der Ansprüche 1 - 10; oder eines Systems (200) nach Anspruch 11 oder eines Teilesatzes (300) nach Anspruch 12 zum Auftragen eines Klebstoffs (1) auf ein längliches Produkt (4).

14. Verfahren zum Auftragen eines Klebstoffs (1) auf ein längliches Produkt (4), wobei das Verfahren die folgenden Schritte umfasst:
i) Bereitstellen einer Vorrichtung (100) nach einem der Ansprüche 1 - 10;
ii) Einführen eines Endes des Klebebandes (2) über den Bandschlitz (16) in den Kanal (10) des Führungselements (8) der Vorrichtung derart, dass der freiliegende Klebstoff (1) des Klebebandes (2) beim Eintreten in den Kanal (10) dem ersten Ende (12) des Kanals (10) zugewandt ist;
iii) Anordnen des länglichen Produkts (4) in dem Kanal (10) des Führungselements (8);
iv) Verschieben des länglichen Produkts (4) entlang des Kanals (10) des Führungselements (8) in einer Richtung von dem ersten Ende (12) des Kanals zu dem zweiten Ende (14) des Kanals, wodurch bewirkt wird, dass der freiliegende Klebstoff (1) des Klebebandes (2) entlang einer gewünschten Erstreckung davon an dem länglichen Produkt (4) haftet;
v) Durchschneiden des Klebebandes (2), sobald die gewünschte Erstreckung des Auftragens erreicht ist.

15. Verfahren nach Anspruch 14, wobei das längliche Produkt (4) ein flexibles Produkt ist, wie etwa ein Elektrokabel, ein Datenkabel, eine Gummidichtung; ein Rohr oder Schlauch, wie etwa ein flexibles Rohr oder Schlauch, wie etwa ein flexibles Rohr zur Versorgung eines Patienten mit Luft oder Sauerstoff in medizinischer Qualität; oder wobei das längliche Produkt (4) ein nicht flexibles Produkt ist, wie etwa ein extrudiertes Aluminiumprofil, eine Leiste für Fenster oder für Bodenpaneele.

## Revendications

1. Dispositif (100) destiné à appliquer un adhésif (1) sur un produit longitudinal (4), ledit dispositif comprenant :
un corps (6) comprenant un élément de guidage (8) ; ledit élément de guidage (8) comprenant un canal (10) destiné à recevoir et guider un produit longitudinal par rapport audit élément de guidage, ledit canal (10) comportant une première extrémité (12) et une seconde extrémité (14) ;
ledit élément de guidage (8) comprenant une fente de ruban (16) destinée à guider un ruban adhésif (2) dans ledit canal (10) ;
ledit canal (10) comprenant une surface de guidage (18) ; et ladite fente de ruban (16) s'étendant à travers au moins une partie du matériau dudit élément de guidage (8) et dans ladite surface de guidage (18) dudit canal (10), permettant ainsi l'alimentation d'un ruban adhésif (2) à travers le matériau dudit élément de guidage (8) et dans ledit canal (10) dudit élément de guidage (8), ledit élément de guidage (8) comprenant une première partie d'élément de guidage (24) et une seconde partie d'élément de guidage (26) ;
**caractérisé en ce que** ledit élément de guidage (8) est divisé en ladite première partie d'élément de guidage (24) et ladite seconde partie d'élément de guidage (26) qui sont séparées et peuvent être démontées au niveau d'une interphase (33), ladite interphase étant disposée le long dudit canal (10), coupant ainsi ledit canal (10) le long d'une direction longitudinale de celui-ci.

2. Dispositif (100) selon la revendication 1, ledit canal (10) dudit élément de guidage (8) comportant une extension sensiblement linéaire ; et/ou
ledit canal (10) dudit élément de guidage (8) étant un canal traversant s'étendant à travers le matériau dudit élément de guidage ; ou étant un canal (10) sous une forme d'un évidement disposé au niveau d'une surface dudit élément de guidage ; et/ou
ledit canal (10) comportant une géométrie en coupe transversale sélectionnée dans le groupe des géométries suivantes : un cercle, un ovale, un triangle, un rectangle, tel qu'un carré, ou un hexagone.

3. Dispositif (100) selon l'une quelconque des revendications 1 à 2, ledit élément de guidage (8) étant intégré audit corps (6) dudit dispositif ; ou
ledit élément de guidage (8) étant conçu pour être monté de manière détachable sur ledit corps (6) dudit dispositif ; éventuellement ledit corps (6) dudit dispositif comprenant un moyen de fixation de corps (20), et ledit élément de guidage (8) comprenant un moyen de fixation d'élément de guidage (22) ; ledit moyen de fixation de corps (20) et ledit moyen de fixation d'élément de guidage (22) étant adaptés pour pouvoir entrer en prise de manière détachable l'un avec l'autre, permettant ainsi le changement dudit élément de guidage (8) sur ledit corps (6).

4. Dispositif (100) selon l'une quelconque des revendications précédentes, ladite première partie d'élément de guidage (24) comprenant un premier moyen de mise en prise d'élément de guidage (28), et ladite seconde partie d'élément de guidage (26) comprenant un second moyen de mise en prise d'élément de guidage (30) ; ledit premier moyen de mise en prise d'élément de guidage (28) et ledit second moyen de mise en prise d'élément de guidage (30) étant conçus pour entrer en prise de manière détachable l'un avec l'autre.

5. Dispositif (100) selon l'une quelconque des revendications précédentes, ledit corps (6) comprenant un premier élément de corps (32) et un second élément de corps (34) ; ledit premier élément de corps (32) et ledit second élément de corps (34) étant fixés l'un à l'autre de manière pivotante autour d'un point de pivotement (36), formant ainsi deux mâchoires qui, par rotation l'une par rapport à l'autre, sont conçues pour permettre de changer la configuration dudit dispositif entre une configuration ouverte et une configuration fermée ;
éventuellement ledit premier élément de corps (32) comprenant un premier moyen de fixation de corps (20a) ; et ledit second élément de corps (34) comprenant un second moyen de fixation de corps (20b) ; ladite première partie d'élément de guidage (24) comprenant un premier moyen de fixation d'élément de guidage (22a), ladite seconde partie d'élément de guidage (26) comprenant un second moyen de fixation d'élément de guidage (22b) ; ledit premier moyen de fixation de corps (20a) étant conçu pour entrer en prise de manière détachable avec ledit premier moyen de fixation d'élément de guidage (22a) ; et ledit second moyen de fixation de corps (20b) étant conçu pour entrer en prise de manière détachable avec ledit second moyen de fixation d'élément de guidage (22b), ledit canal (10) étant ainsi formé lors de l'introduction dudit dispositif dans sa configuration fermée ;
ou éventuellement ledit premier élément de corps (32) comprenant un premier moyen de fixation de corps (20a), ladite première partie d'élément de guidage (24) comprenant un premier moyen de fixation d'élément de guidage (22a) ; ledit premier moyen de fixation de corps (20a) étant conçu pour entrer en prise de manière détachable avec ledit premier moyen de fixation d'élément de guidage (22a) ; et ladite seconde partie d'élément de guidage (26) étant intégrée dans ledit second élément de corps (34).

6. Dispositif (100) selon l'une quelconque des revendications précédentes, ladite fente de ruban (16) étant une fente de ruban fermée permettant d'accéder audit canal (10) uniquement à partir d'une ouverture d'extrémité de ladite fente de ruban disposée à l'opposé de l'entrée de ladite fente de ruban (16) dans ledit canal (10) dans ledit élément de guidage (8) ; ou ladite fente de ruban (16) étant une fente de ruban ouverte, permettant en outre d'accéder audit canal (10) le long de l'extension de ladite fente de ruban (16).

7. Dispositif (100) selon l'une quelconque des revendications précédentes, ladite section transversale dudit canal (10) dudit élément de guidage (8) comprenant une courbe circulaire essentielle (58) comprenant une encoche (60), ladite encoche s'étendant à partir du centre (C) de ladite courbe circulaire et dans le matériau dudit élément de guidage (8) ;
éventuellement ladite encoche (60) s'étendant tout le long de la direction longitudinale dudit canal (10) ;
et/ou éventuellement ladite encoche (60) étant disposée au niveau de la partie longitudinale de la surface dudit canal (10) correspondant à l'emplacement de l'entrée de ladite fente de ruban (16).

8. Dispositif (100) selon la revendication 5, ledit premier élément de corps (32) et/ou ledit second élément de corps (34) comprenant un évidement longitudinal, formant ainsi ledit élément de guidage (8) en tant que partie intégrante dudit corps (6) ; ledit ou lesdits évidements définissant ainsi ledit canal (10), lorsque ledit premier élément de corps (32) et ledit second élément de corps (34) sont amenés dans leur configuration fermée ;
éventuellement ledit premier élément de corps (32) et ledit second élément de corps (34) comprenant des moyens de mise en prise (28, 30) conçus pour entrer en prise l'un avec l'autre lors de l'amenée dudit premier élément de corps (32) et dudit second élément de corps (34) dans leur configuration fermée, empêchant ainsi tout mouvement latéral du premier élément de corps (32) et dudit second élément de corps (34) l'un par rapport à l'autre lorsqu'ils se trouvent dans leur configuration fermée.

9. Dispositif (100) selon l'une quelconque des revendications précédentes, ledit dispositif comprenant en outre un support de rouleau de ruban (38) destinée à supporter un rouleau (40) de ruban adhésif (2) ;
ledit support de rouleau de ruban (38) comportant éventuellement une orientation, par rapport à ladite fente de ruban (16) dudit élément de guidage (8), d'une manière permettant qu'une fois chargée avec une bobine de ruban adhésif (2), ledit rouleau (40) de ruban adhésif définisse un plan qui coupe sensiblement ladite fente de ruban (16) ; et/ou
ledit support de rouleau de ruban (38) comprenant éventuellement un montant (44) comportant une partie proximale (46) et une partie distale (48), ladite partie proximale étant fixée audit corps (6) dudit dispositif et ladite partie distale comprenant un moyen de support de rouleau (50), ledit moyen de support de rouleau étant conçu pour permettre à un rouleau de ruban (40), une fois montée sur ledit support de rouleau de ruban (38), de tourner par rapport audit montant ;
ou
ledit dispositif comprenant en outre un rouleau (56), ledit rouleau comprend un premier moyen de fixation de rouleau (52), et ledit corps (6) comprenant un second moyen de fixation de rouleau (54), ledit premier moyen de fixation de rouleau (52) étant conçu pour entrer en prise de manière détachable avec ledit second moyen de fixation de rouleau (54).

10. Dispositif (100) selon l'une quelconque des revendications précédentes, ledit élément de guidage (8) comprenant une fente de ruban auxiliaire (62) destinée à guider un ruban de protection (64) dans ledit canal (10), ladite fente de ruban auxiliaire (62) s'étendant à travers le matériau de l'élément de guidage (8) dans ledit canal (10) dans une position à côté de ladite fente de ruban (16) ; comprenant en outre éventuellement un support de rouleau de ruban pour ledit ruban de protection (64).

11. Système (200) comprenant un dispositif (100) selon l'une quelconque des revendications 1 à 10 en combinaison avec un ensemble de deux éléments de guidage (8) ou plus, en ce qui concerne deux ou plus desdits deux éléments de guidage ou plus, lesdites géométries et/ou dimensions dudit canal (10) étant différentes.

12. Kit de pièces (300) comprenant un dispositif (100) selon l'une quelconque des revendications 1 à 10 en combinaison avec un ou plusieurs rouleaux (40) de ruban adhésif (2) ; et ladite géométrie et lesdites dimensions dudit ruban adhésif (2) étant adaptées à la géométrie et aux dimensions de la fente de ruban (16) d'un élément de guidage (8) dudit dispositif ; éventuellement en outre en combinaison avec un ou plusieurs rouleaux de ruban de protection (64).

13. Utilisation d'un dispositif (100) selon l'une quelconque des revendications 1 à 10 ; ou d'un système (200) selon la revendication 11, ou d'un kit de pièces (300) selon la revendication 12 pour appliquer un adhésif (1) sur un produit longitudinal (4).

14. Procédé permettant l'application d'un adhésif (1) sur un produit longitudinal (4), ledit procédé comprenant les étapes suivantes :
i) la fourniture d'un dispositif (100) selon l'une quelconque des revendications 1 à 10 ;
ii) par l'intermédiaire de ladite fente de ruban (16), l'insertion d'une extrémité du ruban adhésif (2) dans le canal (10) de l'élément de guidage (8) dudit dispositif de sorte que l'adhésif exposé (1) dudit ruban adhésif (2), en entrant dans ledit canal (10), se trouve face à ladite première extrémité (12) dudit canal (10) ;
iii) la disposition dudit produit longitudinal (4) dans ledit canal (10) dudit élément de guidage (8) ;
iv) le déplacement dudit produit longitudinal (4) le long dudit canal (10) dudit élément de guidage (8), dans une direction allant de ladite première extrémité (12) dudit canal à ladite seconde extrémité (14) dudit canal, amenant ainsi ledit adhésif exposé (1) dudit ruban adhésif (2) à adhérer audit produit longitudinal (4) le long d'une extension souhaitée de celui-ci ;
v) la découpe du ruban adhésif (2), une fois l'extension d'application souhaitée atteinte.

15. Procédé selon la revendication 14, ledit produit longitudinal (4) étant un produit souple, tel qu'un câble électrique, un câble de données, un joint en caoutchouc ; un tube ou un tuyau, tel qu'un tube ou un tuyau souple, tel qu'un tube souple destiné à délivrer de l'air ou de l'oxygène de qualité médicale à un patient ; ou ledit produit longitudinal (4) étant un produit non souple, tel qu'un profilé en aluminium extrudé, une garniture pour fenêtres ou pour panneaux de sol.
